# EUROPEAN PATENT APPLICATION

(11) **EP 3 226 171 A1**
(43) Date of publication of application: **04.10.2017**
(21) Application number: 16170083.6
(22) Date of filing: 18.05.2016
(51) Int. Cl.: G06K 9/00

(54) **HANDWRITING DYNAMIC ANALYSING SYSTEM**

(30) Priority: 01.04.2016 EP 16163534
(71) Applicant: Andersen, Steen Esmann Orsted, 4040 Jyllinge (DK); Munk, Niels, 9240 Nibe (DK)
(72) Inventor: Andersen, Steen Esmann Orsted, 4040 Jyllinge (DK); Munk, Niels, 9240 Nibe (DK)
(74) Representative: Holme Patent A/S

(57) **Abstract**

A method of verifying, based on a handwritten master signature (27) on a signature accepting structure such as paper, the authenticity of a handwritten sample signature (28), the master signature being a master indentation line (20a) and the sample signature being a sample indentation line (20b) on the signature accepting structure, wherein the method comprises the steps of: providing a light source (9), providing a camera (6) with an objective (7) configured to magnify the image of at least a segment of the signature, providing a fixation means (1) for fixing the signature accepting structure on or at the fixation means, the fixation means being spaced apart from the objective (7), obtaining a plurality of master images represented by master data at a plurality of master subareas of interest (SAOIs) along the master indentation line (20a) of the master signature (27) using the camera (6) to provide at least a part of a representation of the master signature, analysing the obtained master data to obtain a plurality of master parameters of the plurality of master SAOIs of the master signature, obtaining a plurality of sample images represented by sample data at a plurality of sample SAOIs along the sample indentation line (20b) of the sample signature (28) using the camera to provide at least a part of a representation of the sample signature, analysing the obtained sample data to obtain a plurality of sample parameters of the plurality of sample SAOIs of the sample signature, and comparing the obtained plurality of master and sample parameters to verify the authenticity of the handwritten sample signature (28).

## Description

The invention relates to a method of verifying based on a handwritten master signature on a signature accepting structure such as paper, the authenticity of a handwritten sample signature, the master and sample signatures being master and sample pigment lines within respective master and sample indentation lines on the signature accepting structure.

To authenticate a document a signature has been used for centuries. The signature is interpreted as an indication that the signor accepts the conditions expressed in the document.

As long as the signature has been used forgeries have also been around. Since the signature by the same person varies from time to time and also changes over time, so that a signature ten years old can be quite different compared to one of today, it is not always so easy to distinguish a genuine signature from a forged one.

A signature written by a specific person, can easily be emulated by another person, simply by drawing after it, by looking at it and learning to copy it, or by more advanced techniques, like overlay papers, contagion, and many others.

There are various techniques to determine whether a signature is genuine or a forgery. The forged signature will most often show strange stops, pen lifts, hesitations, tremor, missed directions as the writing is not as fluent as the genuine, too thick lines due to slow moving. The disadvantages of these methods of finding indications or forgery, is that they are time consuming and difficult to make computer-assisted.

Other methods have previously been presented for computer-assisted analysis. Some methods require that the signatures to be compared be written with a specific pen, which includes various sensors to record speed, pressure, angle, time and more into a database. The major drawback of such methods is that the questioned signature must be written using the same device as in US8897511B2.

Other methods are based on image analysis and feature extraction like angles, circle diameters, thickness of lines, stop dots, distance between strokes, etc., as for example disclosed in WO0141051A1. Similar methods have been presented in engineering and forensic journals over time. The drawback of these methods is that they require a lot a data material to provide reasonable good results, and as the methods are based on straight image analysis, the system can be "cheated".

The drawbacks and disadvantages of the above-mentioned prior art are according to the invention remedied by,
in a first aspect, according to the invention, providing a method that easily and reliably verifies the authenticity of a questioned handwritten signature,
in a second aspect, according to the invention, providing a method, where any two signatures handwritten on paper or on any other soft material can be determined to have been made by the same person or by two different persons,
in a third aspect, according to the invention, providing a method to verify the authenticity of a questioned handwritten signature that is fast and accurate,
in a fourth aspect, according to the invention, providing a method to verify the authenticity of a questioned handwritten signature that enable anybody to distinguish the genuine signature from a forged one, and
in a fifth aspect, according to the invention, providing a method that easily and reliably verifies that two bullets have been fired using the same firearm.

In the following the use of the term "pen" shall be understood to mean any writing utensil or any tool that can be used to write a signature on a signature accepting structure. The term "pen" can preferably be understood to mean a ballpoint pen, fountain pen, fineliner, felt-tip pen or similar, since they are most common to use when signing documents.

In the following the use of the term "pigment" shall be understood to mean any liquid with pigment like e.g. ink and any dry material like graphite, blacklead, crayon, pastel, chalk or similar used when writing, or anything that can be applied by a writing utensil like a pen or pencil.

In the following, the use of the terms "camera" and "objective" when discussing movement of one of them or both of them in relation to the signature accepting structure comprising the signature to be investigated shall be understood to mean that any of "camera" and "objective" or both of them are moved in relation to the signature accepting structure comprising the signature unless the opposite is clearly stated.

The novel and unique features according to the invention whereby this is achieved consists in the fact that the method comprises the steps of: providing a light source, providing a camera with an objective configured to magnify the image of at least a segment of the signature, providing a fixation means for fixing the signature accepting structure on or at the fixation means, the fixation means being spaced apart from the objective, obtaining a plurality of master images represented by master data at a plurality of master subareas of interest (SAOIs) along the master indentation line of the master signature using the camera to provide at least a part of a representation of the master signature, analysing the obtained master data to obtain a plurality of master parameters of the plurality of master SAOIs of the master signature, obtaining a plurality of sample images represented by sample data at a plurality of sample SAOIs along the sample indentation line of the sample signature using the camera to provide at least a part of a representation of the sample signature, analysing the obtained sample data to obtain a plurality of sample parameters of the plurality of sample SAOIs of the sample signature, and comparing the obtained plurality of master and sample parameters to verify the authenticity of the handwritten sample signature.

The light source should be understood to include any light source like e.g. a lamp, a laser, the sun or any background light, where the signatures can be investigated.

The objective can also within the context of the present invention be understood to mean a microscope with the camera attached to the microscope to capture the picture magnified by the microscope or with the camera being integrated with the microscope.

The presentation of the indentation of a signature can be the master or sample parameter as a function of distance from the start point or first point of measurement of the signature. The comparison of the sample signature and of the master signature can be between the master parameter and sample parameter as a function of distance from the start point or first point of measurement of the two signatures.

The objective preferably can magnify the image of the signature so much that a part of the line of the signature and preferably a little bit of the plain signature accepting structure like e.g. paper, where the tip of the pen or the pigment from the pen has not influenced the signature accepting structure, on one side or on both sides of the line can be visible in the image. The surface of the plain signature accepting structure defines an upper top level, where the tip of the pen has made no indentation in the signature accepting structure. To know the upper level of the signature accepting structure gives a reference level, which enables a depth of the indentation to be determined that can be compared between different signatures.

The method described according to this invention for recognizing the authenticity of a written signature on a signature accepting structure, can be based on analysing the dynamic fluency of the written signature. By measuring the indentation of the signature in the signature accepting structure as a function of the position, a kind of "signature DNA" curve can be uncovered. When the signature indentation is measured in a large number of positions (the number depends on the signature size and the precision required), the correlation between curves from signatures made by the same person will be very high, and the correlation with forged signatures will be very low, independent of the type of signature accepting structure and pen type used to write the signature, and largely independent of the variations in which the same person will make the signature from time to time. The number of measuring points can be up to 200, or even higher. Preferably between 100 and 150 measuring points can be used, which will give a good accuracy and at the same time a not too long processing time. With many measuring points the risk is minimised that only measuring points are selected, where the signature line is shallow or, where the signature line is deep.

The advantage of this method is that the method can be performed on existing signatures made with any pen on any surface at any time. Only one genuine master signature and one questioned sample signature are needed. In order to verify the significance of the system, it can be important to have more genuine signatures to demonstrate the correlation between the genuine signatures and the missing correlation between a forged signature and the genuine signature.

To obtain the master or sample parameters of a signature and how they vary along the signature is essential since such variation along the signature is a fingerprint of a writer and is very difficult to study and copy by a forger.

It can also be possible to have one or more genuine master signatures analysed by the method of the present invention and the topography of the at least one subarea of interest (SAOI) of each of the one or more genuine signatures stored on an electronic storage system. A bank, an authority, or anybody else that needs to verify the authenticity of a questioned sample signature can then analyse one or more SAOIs of the sample signature to obtain the topography(s) of the one or more SAOIs of the sample signature. The topography(s) at the one or more SAOIs of the sample signature can then be compared to the stored topography(s) of the master signature and the authenticity of the sample signature can be determined. That also means that the at least one master signature and the sample signature do not need to be provided and/or analyses at almost the same time but can be provided and/or analysed on different days, months and even at different years.

Not everybody appreciates to have his or her signature stored electronically. For that reason the topographical profile as a function of distance from the start of the signature i.e. the depth at different positions of the signature could be stored on debit or credit card or similar and could be extracted.

The measurement of indentation can be made in several ways, but in order to be able to distinguish the indentation of the signature from the "natural" variations in the topography of different types of signature accepting structure, which can often be at the same level, the presented method can deal with this challenge also.

Preferably at least one of the master SAOIs and at least one of the sample SAOIs can be chosen from the same part, point or area of the master signature and the sample signature, respectively. Where the signature turns as e.g. at the bottom of the letter "p" it will be easy to find one SAOI from each of the master signature and the sample signature that are from the same part signature. The advantage is that the pressure made by the signer will be equally high or low in both signatures, at least on a relative level compared to the rest of the signatures.

The signature accepting structure is positioned on a fixation means that can keep the signature accepting structure in position and make sure that the signature accepting structure is as flat as possible using e.g. vacuum or static electricity.

In a preferred embodiment of the invention the method can comprise the step of: defining an area of interest (AOI) as a target for positioning the camera and objective in relation to the signature to obtain the master data of the at least one master image and/or the sample data of the at least one sample image.

The AOI can be defined to comprise the whole signature or just a part of it. By defining the AOI the user determines the part of the signature accepting structure to be analysed. If the user would like to determine a sample SAOI of the signature then the user can easily zoom out to view the whole of the AOI and choose the sample SAOI.

The method can also be used to study the structure of other surfaces and to compare the similarities of two or more surfaces.

The method can be used to compare a sample bullet or projectile fired by a firearm with a master bullet or projectile fired by a known firearm to verify whether the sample bullet is fired by the same firearm as the master bullet.

The method according to the invention can then be modified in that
a bullet replaces the signature accepting structure,
a master signature made by a master rifling of a known firearm replaces the handwritten master signature, and
a sample signature made by a sample rifling of an unknown firearm replaces the handwritten sample signature.

The rifling of a barrel of a firearm will cut or engrave the surface of the bullet in a unique way. The unique cut will be the same on each bullet fired by the same firearm and it will be possible to distinguish whether two bullets have been fired using the same firearm.

To be able to determine the particular weapon, from which a bullet has been fired is essential in investigations regarding murder and murder attempts using firearms.

The fixation means for a bullet can advantageously be a vice or a vice bench.

In a preferred embodiment of the invention the master and sample parameters can be chosen from one or more of: depth or width of the master indentation line within the plurality of master SAOIs and of the sample indentation line within the plurality of sample SAOIs, respectively, depth, thickness or width of the master pigment line within the plurality of master SAOIs and of the sample pigment line within the plurality of sample SAOIs, respectively, relative height of two master longitudinal edges of the master pigment line within the plurality of master SAOIs and of two sample longitudinal edges of the sample pigment line within the plurality of sample SAOIs, respectively, or relative position of the master pigment line within the master indentation line within the plurality of master SAOIs and of the sample pigment line within the sample indentation line within the plurality of sample SAOIs, respectively.

The indentation lines having depths defined by vertical distances between points substantially at the bottom of the indentation lines and a level corresponding substantially with a top level of the signature accepting structure. Of course, the bottom levels of the indentation lines can be covered by the pigment lines, so that the vertical distances are calculated between the points substantially at the bottom level of the pigment lines and the level corresponding substantially with the top level.

The master and sample pigment lines having each two longitudinal edges at the transitions, where the signature accepting structure are going from being covered to being not covered by the pigment lines.

The difference in height of the longitudinal edges of the pigment line on either side of the signature will disclose in which direction the signer held the pen when writing. A right-handed person will normally hold the pen such that the pen points in the direction up from the signature accepting structure to the right side of the signer when seen from the signer's point of view.

A left-handed person will normally tilt the pen to the opposite side. Sometimes, especially lefty-handed persons tilt the pen away from themselves.

By determining the difference in height of the longitudinal edges of the pigment line it is possible to discern different pen positions used when writing. Right-handed and left-handed persons will be discerned too. To show how the pen-position varies along the signature can also be used to separate the genuine signature from a forged one.

To obtain the master or sample parameter of a signature is essential since the width and depth made by the pen or any other tool, as well as the thickness and width of the pigment line, the relative height of the longitudinal edges of the pigment line, and the relative position of the longitudinal edges of the indentation and of the pigment line are fingerprints that cannot be easily studied and copied by a forger. Especially the variation along the signature in depth made by the pen or any other tool and the variation along the signature in relative height of the longitudinal edges of the pigment line are very difficult to study and copy by a forger.

In an expedient embodiment of the invention the numbers of master SAOIs and of sample SAOIs can be at least m and n, respectively, where m and n are independently at least five, at least ten, preferably at least 20, preferably at least 30, preferably at least 50, preferably at least 75, or preferably at least 100, where the method can comprise the steps of: obtaining at at least an i^{th} of the at least m master SAOIs of the master signature at least two master images represented by master data using the camera, where i is an integer between or including 1 or m, and obtaining at at least a j^{th} of the at least n sample SAOIs of the sample signature at least two sample images represented by sample data using the camera, where j is an integer between or including 1 or n.

To obtain two images of the same SAOI, where the camera and/or the objective have different positions relative the SAOI can be one way to determine the depth of the signature within the SAOI. The two images can e.g. be captured with two different distances between the camera and/or the objective relative the signature or with substantially the same distance but with different relative positions.

It should be understood according to the present invention, that at least two master images represented by master data using the camera can be obtained for each of a plurality of SAOIs of the at least m master SAOIs of the master signature, and that at least two sample images represented by sample data using the camera can be obtained for each of a plurality of SAOIs of the at least n sample SAOIs of the sample signature.

In another expedient embodiment of the invention the method can comprise the steps of: obtaining at at least an i^{th} of the at least m master SAOIs of the master signature a series of master images at different selected relative positions and/or distances between the objective and the master signature, and obtaining at at least a j^{th} of the at least n sample SAOIs of the sample signature a series of sample images at different selected relative positions and/or distances between the objective and the sample signature.

To obtain a series of images of the same SAOI, where the camera and/or the objective have different positions - preferably different distances - relative the SAOI, will give very detailed information about the topography of the signature in the SAOI and consequently a very accurate determination about the depth of the signature in the SAOI.

The series of master images can be captured by the camera with the objective having the same focal length. Likewise, the series of sample images can be captured by the camera with the objective having the same focal length. By keeping the focal length unchanged when moving the camera and/or objective closer to or further away from the signature when taking the images and using a relatively short focal depth, the topography of the signature within the SAOI can easily be determined, since the different parts of the signature within the SAOI will come into focus in one image and be out of focus in the next image. By knowing the distance the camera and/or objective is/are moved closer to the signature between each image the topography of the signature can be built up. It is not necessary to know the absolute distance between the camera and/or objective in relation the signature accepting structure but only the relative distance the camera and/or objective is moved between each picture.

Of course, the distance moved between each image can be so short relative the focal depth that the same part of the signature is in focus in many images. That will give a detailed determination of the topography of the signature.

Likewise, the distance moved between each image can be so long relative the focal depth that the some intermediate parts of the signature are not in focus in any of the images. That will make the determination of the topography of the signature very fast.

The series of master images or the series of sample images can comprise images, wherein the top level of the signature accepting structure surface or the top level of the impression of the signature, and/or the bottom of the impression of the signature are in focus.

It should be understood according to the present invention, that at least a series of master images at different selected relative positions and/or distances between the objective and the master signature represented by master data using the camera can be obtained for each of a plurality of SAOIs of the at least m master SAOIs of the master signature, and that at least a series of sample images at different selected relative positions and/or distances between the objective and the sample signature represented by sample data using the camera can be obtained for each of a plurality of SAOIs of the at least n sample SAOIs of the sample signature.

In another embodiment according to the invention the method further can comprise the step of: determining the correlation between the master and sample parameters using statistical analysis.

When comparing the obtained master and sample parameters of the sample signature and the master signature, respectively, statistical analysis is a powerful tool. There are many different statistical models to calculate the correlation between the sample signature and the master signature. The skilled person will know the ones most useful.

The calculated correlation between the master signature and the sample signature will give a number that anybody can read and thus understand whether the master signature and the sample signature are written by the same person. The master signature can also be compared to another master signature and a correlation between them can be calculated. The difference in the correlation number between the two master signature and between one of master signature and the sample signature will make it even more apparent whether the master signatures and the sample signature are written by the same person. To study many SAOIs of the master signature and many SAOIs of the sample signature will enhance the difference in correlation between the master signature and the sample signature if written by different persons or the correlation will keep a high number if the master signature and the sample signature are written by the same persons.

In an advantageous embodiment according to the invention the method further can comprise the steps of: a) calculating, from each image of the series of master images, a master fragment being in focus, obtaining a series of master fragments, b) calculating, using the obtained series of master fragments, the master parameter at the at least i^{th} of the at least m master SAOIs based on one or more of: the distance between the top and bottom levels of the master indentation line, the distance between the top and bottom levels of the master pigment line, the relative height of the two master longitudinal edges of the master pigment line, the distance between the top and bottom levels of the 2-dimensional master profile, or the distance between the top level of the master pigment line and the bottom level of the 2-dimensional master profile, c) calculating, from each image of the series of sample images, a sample fragment being in focus, obtaining a series of sample images, d) calculating, using the obtained series of sample fragments, the sample parameter at the at least j^{th} of the at least n sample SAOIs based on one or more of: the distance between the top and bottom levels of the sample indentation line, the distance between the top and bottom levels of the sample pigment line, the relative height of the two sample longitudinal edges of the sample pigment line, the distance between the top and bottom levels of the 2-dimensional sample profile, or the distance between the top level of the pigment line and the bottom level of the 2-dimensional sample profile, and optionally one or more of the further steps of: a') subsequent to step a, wherein step a' includes the steps: saving/storing from the series of master images the fragments in focus together with for each fragment the associated distance between the objective and the master signature, calculating based on the at least i^{th} of the at least m master SAOIs of the master signature a 3-dimensional master image made up by the saved/stored fragments of each of the series of master images and the associated distances between the objective and the master signature, and calculating a 2-dimensional master profile perpendicular to the master signature based on the 3-dimensional master image at the at least i^{th} of the at least m master SAOIs, c') subsequent to step c, wherein step c' includes the steps: saving/storing from the series of sample images the fragment in focus together with for each fragment the associated distance between the objective and the sample signature, calculating based on the at least j^{th} of the at least n SAOI of the sample signature a 3-dimensional sample image made up by the saved/stored fragments of each of the series of sample images and the associated distances between the objective and the sample signature, and calculating a 2-dimensional sample profile perpendicular to the sample signature based on the 3-dimensional sample image at the at least j^{th} of the at least n sample SAOIs.

The method presented here will give very accurate master and sample parameters.

The predetermined distance, with which the objective and/or camera relative the master/sample signature can be brought closer to or further away from each other between two succeeding captured pictures depend on the softness of the signature accepting structure. A typical such distance or interval can be 3 µm. But a harder signature accepting structure like e.g. paper, where the overall indentation of the pen is shallower, will require that the distance is only around or less 1 µm, while the distance when studying the signature made on a soft signature accepting structure like e.g. paper can be 10 µm.

The variations of indentation of a pen when writing a signature are within the range of 0 µm and several hundreds of µm typically within the range of 5 µm and 50 µm. Of course the indentation depends on the signature accepting structure, the pen and the support under the signature accepting structure as well as on the pressure of the pen, which varies from signer to signer. Using a soft signature accepting structure, a soft support and/or a sharp pen, a signer will cause a deeper indentation compared to when the same signer uses a hard signature accepting structure, a hard support and/or a blunt pen. As mentioned above, the relative distance, with which the objective and/or camera are brought closer to the signature accepting structure with the signature for each measurement, is dependent on the hardness of the signature accepting structure. Using the typical value, 3 µm, mentioned above means that with an indentation up to 50 µm around 20 measurements from the top level to the bottom of the signature with a variation in indentation, that is somewhere in the middle, will give a reliable presentation of the indentation of the signature within a short time. Preferably, a top level and a bottom level of the signature at the SAOI are measured giving a total distance. The total distance is parted in ten or in 20 or in 30, which gives a good value of the interval.

To determine which part of the SAOI which is mostly in focus in which of the captured images along the Z-axis, the contrast level in each part of the images are compared between all the images. This is a common technique known in image analysis and multi-focus composition.

The skilled person will understand that the order of determining the master parameter and the sample parameter treatment is arbitrary and of no importance to the final verification. Thus there is no mandatory order.

In another embodiment according to the invention the method further can comprise the steps of: defining a start SAOI and an end SAOI along the line of the master signature or the sample signature, and using a software programme to select a predefined number of SAOIs between the start SAOI and the end SAOI along the line, preferably the predefined SAOIs are equidistant.

By defining the positions of the start SAOI and the end SAOI and using the software programme to select intermediate SAOIs along the signature line a lot of time is saved. It will take lot of time for the user to define each SAOI along the signature line especially if tens or even hundreds of SAOI are necessary.

In a preferred embodiment of the invention the method can comprise the steps of: providing a vacuum table as the fixation means, which vacuum table is spaced apart from the objective, and providing vacuum to the vacuum table for fixing the signature accepting structure on the vacuum table.

A vacuum table as the fixation means can be a preferable solution.

The signature accepting structure can be positioned on the vacuum table and vacuum can be provided to the vacuum table e.g. by a vacuum pump. When the vacuum is provided to the vacuum table, the vacuum table keeps the signature accepting structure in position and makes sure that the signature accepting structure is as flat as possible. Without the vacuum through the vacuum table, the indentation measurement can be difficult to perform correctly, as the topography of the signature accepting structure will vary too much.

In another embodiment according to the invention for each of the plurality of master SAOIs along the master indentation line of the master signature, a master direction perpendicular to the master indentation line and for each of the plurality of sample SAOIs along the sample indentation line of the sample signature a sample direction perpendicular to the sample indentation line are chosen.

By indicating the perpendicular direction to the signature line within a SAOI the software will measure the profile of the signature line using the right direction.

To know the direction in the picture is especially important if e.g. the relative heights of the longitudinal edges are to be determined. To know the direction in the picture is also important if the profiles of the indentation in SAOI of the master signature are compared to the profiles of the indentation in SAOI of the sample signature.

The invention also relates to a device for verification based on a handwritten master signature the authenticity of a handwritten sample signature, which handwritten master signature and handwritten sample signature have respective master and sample pigment lines within master and sample indentation lines on a signature accepting structure, such as paper, the device comprises a fixation means, such as a fixation table, and a processor, a camera with an objective configured to magnify an image of at least a segment of a signature, and a moving member to move the camera and the objective relative the fixation means, wherein the device is adapted to capture a plurality of master images of a plurality of master SAOIs (subarea of interest) of a handwritten master signature of pigment on a signature accepting structure when held in place by the fixation means, and a plurality of sample images of a plurality of sample SAOIs of the handwritten sample signature of pigment on the signature accepting structure when held in place by the fixation means, the processor has analysing software adapted to obtain a plurality of master parameters of the plurality of master SAOIs of the master signature, and a plurality of sample parameters of the plurality of sample SAOIs of the sample signature, and the processor has comparing software adapted to compare the master parameters and the sample parameters.

The comparison between the master parameters and the sample parameters can be that the master parameters and the sample parameters are presented next to each other, preferably the master parameter as a function of the position along the master signature line and the sample parameter as a function of the position along the sample signature line are presented next to each other.

The processor can be a stand-alone unit like e.g. a computer or the processor can be integrated with e.g. the camera.

The objective can also within the context of the present invention be understood to mean a microscope with the camera attached to the microscope to capture the picture magnified by the microscope or with the camera being integrated with the microscope.

During use of the device a signature accepting structure with a signature can be positioned on the fixation means in the form of a fixation table to be fixated by e.g. vacuum or static electricity.

Preferably the device comprises a light source like a lamp or a light bulb. The light source can also be understood to comprise any light source like e.g. a laser, the sun or any background light. The light source does not need to be attached to the device.

The moving member can be adapted to move the fixation means in the xy-directions and the camera as well as the objective in the z-direction. All other configurations can also be possible.

What the comparing software can do is to present the master parameter of the at least master SAOI and the sample parameter of the at least sample SAOI next to each other on a screen on a printout to enable easy comparison and verification.

The advantage of this device is that the device can be used on existing signatures made with any pen on any surface at any time. Only one genuine master signature and one questioned sample signature are needed. In order to verify the significance of the system, it can be important to have more genuine signatures to demonstrate the correlation between the genuine signatures and the missing correlation between a forged signature and the genuine signature.

To obtain the master or sample parameters of a signature and how they vary along the signature is essential since such variation along the signature is a fingerprint of a writer and is very difficult to study and copy by a forger.

The comparing software can comprise software to calculate the correlation between the master and the sample parameters.

The plurality of master and sample images, master and sample SAOIs, and master and sample parameters can mean a number that is at least five, at least ten, preferably at least 15, preferably at least 20, preferably at least 30, more preferably at least 50, even more preferably at least 75, or most preferably at least 100.

The device can also be used to study the structure of other surfaces and to compare the similarities of two or more surfaces. The device is very useful in determine the topography of a structure in detail within a short time.

The device can be used to compare a sample bullet or projectile fired by a firearm with a master bullet or projectile fired by a known firearm to verify whether the sample bullet is fired by the same firearm as the master bullet.

The device according to the invention can then be modified in that
the signature accepting structure is a bullet,
the handwritten master signature is replaced by a master signature made by a master rifling of a known firearm, and
the handwritten sample signature is replaced by a sample signature made by a sample rifling of an unknown firearm or a firearm to be investigated.

The rifling of a barrel of a firearm will cut or engrave the surface of the bullet in a unique way. The unique cut will be the same on each bullet fired by the same firearm and it will be possible to distinguish whether two bullets have been fired using the same firearm.

To be able to determine the particular weapon, from which a bullet has been fired is essential in investigations regarding murder and murder attempts using firearms.

The fixation means for a bullet can advantageously be a vice or a vice bench.

In a expedient embodiment according to the invention, the master and sample parameters can be chosen from one or more of: depth or width of the master indentation line within the plurality of master SAOIs and of the sample indentation line within the plurality of sample SAOIs, respectively, thickness or width of the master pigment line within the plurality of master SAOIs and of the sample pigment line within the plurality of sample SAOIs, respectively, relative height of two master longitudinal edges of the master pigment line within the plurality of master SAOIs and of two sample longitudinal edges of the sample pigment line within the plurality of sample SAOIs, respectively, or relative position of the master pigment line within the master indentation line within the plurality of master SAOIs and of the sample pigment line within the sample indentation line within the plurality of sample SAOIs, respectively.

The indentation lines having depths defined by vertical distances between points substantially at the bottom of the indentation lines and a level corresponding substantially with a top level of the signature accepting structure. Of course, the bottoms of the indentation lines can be covered by the pigment lines, so that the vertical distances are calculated between the points substantially at the bottom of the pigment lines and the level corresponding substantially with the top level.

The master and sample pigment lines having each two longitudinal edges (the master and sample longitudinal edges) at the transitions, where the signature accepting structure are going from being covered to being not covered by the pigment lines.

The difference in height of the longitudinal edges of the pigment line on either side of the signature will disclose in which direction the signer held the pen when writing. A right-handed person will normally hold the pen such that the pen points in the direction up from the signature accepting structure to the right side of the signer when seen from the signer's point of view.

A left-handed person will normally tilt the pen to the opposite side. Sometimes, especially left-handed persons tilt the pen away from themselves.

By determining the difference in height of the longitudinal edges of the pigment line it is possible to discern different pen positions used when writing. Right-handed and left-handed persons will be discerned too. To show how the pen-position varies along the signature can also be used to separate the genuine signature from a forged one.

To obtain the master or sample parameters of a signature is essential since the width and depth made by the pen or any other tool, as well as the thickness and width of the pigment line, and the relative height of the longitudinal edges of the pigment line are fingerprints that cannot be easily studied and copied by a forger. Especially the variation along the signature in the indentation line made by the pen or any other tool and in the pigment line from the pen are very difficult to study and copy by a forger.

In a preferred embodiment according to the invention the numbers of master SAOIs and of sample SAOIs are at least m and n, respectively, where m and n are independently at least five, at least ten, preferably at least 20, preferably at least 30, preferably at least 50, preferably at least 75, or preferably at least 100, where the device is adapted to capture: at at least an i^{th} of the at least m master SAOIs of the master signature at least two master images represented by master data using the camera, where i is an integer between or including 1 and m, and at at least a j^{th} of the at least n sample SAOIs of the sample signature at least two sample images represented by sample data using the camera, where j is an integer between or including 1 and n.

That the at least two images captured at the i^{th} SAOI can be captured at at least two different distances between the camera and the signature means that the images have been captured, where the distances between the camera and/or the objective on the one side and the signature on the signature accepting structure on the other side are different.

The at least two images captured at the i^{th} SAOI can instead of being captured at different distances between the signature accepting structure and the camera be captured at substantially the same distance but moved sideways in relation to each other.

It should be understood according to the present invention, that at least two master images represented by master data using the camera can be obtained for each of a plurality of SAOIs of the at least m master SAOIs of the master signature, and that at least two sample images represented by sample data using the camera can be obtained for each of a plurality of SAOIs of the at least n sample SAOIs of the sample signature.

In an advantageous embodiment according to the invention the device can be adapted to capture: at at least an i^{th} of the at least m master SAOIs of the master signature a series of master images at different selected relative positions of and/or distances between the objective and the master signature, and at at least a j^{th} of the at least n sample SAOIs of the sample signature a series of sample images at different selected relative positions of and/or distances between the objective and the sample signature.

The series of master images can be captured by the camera with the objective having the same focal length. Likewise, the series of sample images can be captured by the camera with the objective having the same focal length. By keeping the focal length unchanged when moving the camera and/or objective closer to the signature when taking the images and using a relatively short focal depth, the topography of the signature within the SAOI can easily be determined, since the different parts of the signature within the SAOI will come into focus in one image and be out of focus in the next image. By knowing the distance the camera and/or objective is/are moved closer to the signature between each image the topography of the signature can be built up.

Of course, the distance moved between each image can be so short relative the focal depth that the same part of the signature is in focus in many images. That will give a detailed determination of the topography of the signature.

Likewise, the distance moved between each image can be so long relative the focal depth that the some parts of the signature are not in focus in any of the images. That will make the determination of the topography of the signature very fast.

It should be understood according to the present invention, that at least a series of master images at different selected relative positions and/or distances between the objective and the master signature represented by master data using the camera can be obtained for each of a plurality of SAOIs of the at least m master SAOIs of the master signature, and that at least a series of sample images at different selected relative positions and/or distances between the objective and the sample signature represented by sample data using the camera can be obtained for each of a plurality of SAOIs of the at least n sample SAOIs of the sample signature.

In an expedient embodiment according to the invention the analysing software is adapted to calculate a master fragment being in focus of each image of the series of master images, to obtain a series of master fragments, a sample fragment being in focus of each image of the series of sample images, to obtain a series of sample fragments, and the master parameter at the at least i^{th} of the at least m master SAOIs, using the series of master fragments, based on one or more of the distance between the top and bottom levels of the master indentation line, the distance between the top and bottom levels of the master pigment line, or the relative height of the two master longitudinal edges of the master pigment line, and the sample parameter at the at least j^{th} of the at least n sample SAOIs, using the series of sample fragments, based on one or more of the distance between the top and bottom levels of the sample indentation line, the distance between the top and bottom levels of the sample pigment line, or the relative height of the two sample longitudinal edges of the sample pigment line, and optionally in that the analysing software is adapted to save/store from the series of master images at least the master fragments in focus together with for each master fragment the associated distance between the objective and the master signature, and from the series of sample images at least the sample fragments in focus together with for each sample fragment the associated distance between the objective and the sample signature, the analysing software is adapted to calculate for the at least i^{th} of the at least m master SAOIs of the master signature a 3-dimensional master image made up by the saved/stored master fragments of each of the series of master images and the associated distances between the objective and the master signature, a 2-dimensional master profile perpendicular to the master signature based on the 3-dimensional master image at the at least i^{th} of the at least m master SAOIs, for the at least j^{th} of the at least n sample SAOIs of the sample signature a 3-dimensional sample image made up by the saved/stored sample fragments of each of the series of sample images and the associated distances between the objective and the sample signature, and a 2-dimensional sample profile perpendicular to the sample signature based on the 3-dimensional sample image at the at least j^{th} of the at least n sample SAOIs, the master parameter at the at least i^{th} of the at least m master SAOIs based on the distance between the top and bottom levels of the 2-dimensional master profile, or based on the distance between the top level of the master pigment line and the bottom level of the 2-dimensional master profile, and the sample parameter at the at least j^{th} of the at least n sample SAOIs based on the distance between the top and bottom levels of the 2-dimensional sample profile, or based on the distance between the top level of the sample pigment line and the bottom level of the 2-dimensional sample profile.

The device according to the present invention will give very accurate master and sample parameters. A particularly efficient and reliable verification can be reached by the embodiment including one or more of the optional features.

To determine which part of the SAOI which is mostly in focus in which of the captured images along the Z-axis, the contrast level in each part of the images are compared between all the images. This is a common technique known in image analysis and multi-focus composition.

The skilled person will understand that the order of determining the master parameter and the sample parameter treatment is arbitrary and of no importance to the final verification. Thus there is no mandatory order.

In an advantageous embodiment according to the invention the fixation means can be a vacuum table.

The signature accepting structure can be positioned on the vacuum table and vacuum can be provided to the vacuum table e.g. by a vacuum pump. When the vacuum is provided to the vacuum table, the vacuum table keeps the signature accepting structure in position and makes sure that the signature accepting structure is as flat as possible. Without the vacuum through the vacuum table, the indentation measurement can be difficult to perform correctly, as the topography of the signature accepting structure will vary too much.

The invention will be explained in greater details below, giving further advantageous features and technical effects and describing exemplary embodiments with reference to the drawing, in which
Fig. 1 is a principle sketch of the Handwriting Dynamic Analysing System (HDAS),
Fig. 2 illustrates an Area Of Interest (AOI) framing a signature,
Fig. 3 shows a fragment of the signature seen in Fig. 2, where the directions of measurement have been selected,
Fig. 4 is a recordal of a SAOI of a signature in a 3-dimensional picture,
Fig. 5a shows a 2-dimensional master profile of a 3-dimensional picture like the one in Fig. 4 when averaged along the signature line,
Fig. 5b shows a 2-dimensional sample profile of a 3-dimensional picture like the one in Fig. 4 when averaged along the signature line,
Fig. 6a is an exemplary master and sample parameters as functions of positions along the signature when the master signature and the sample signature are signed by the same person,
Fig. 6b discloses master and sample parameters as functions of positions along the signature when the master signature and the sample signature are signed by different persons, and
Fig. 7 discloses flow diagram of the process to verify the authenticity of the questioned or sample signature.

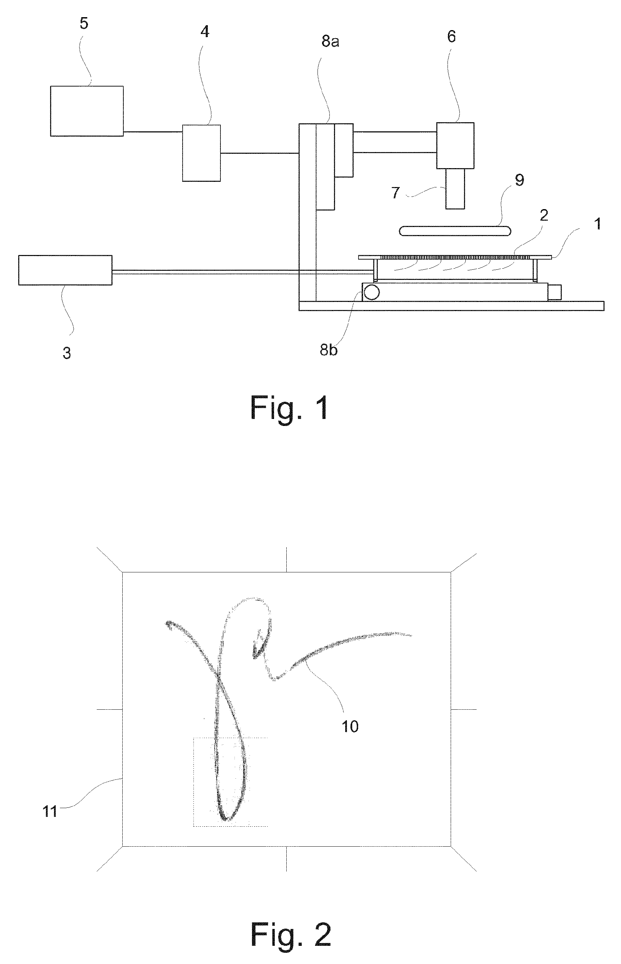

The signature shown in Figs. 2, 3 and 4 is just an example and can be a master signature as well as a sample signature.

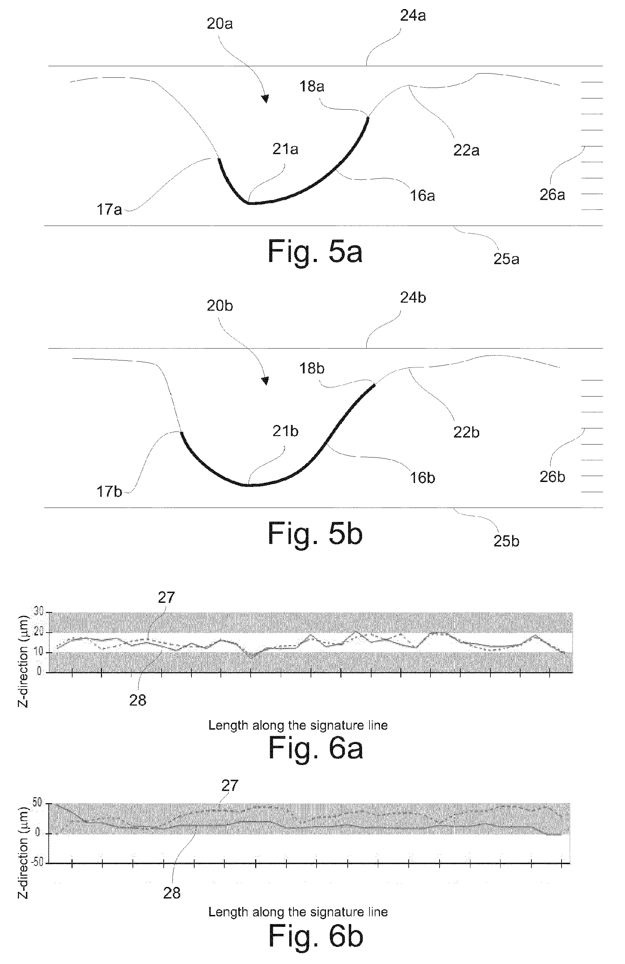

The profiles of a master signature and a sample signature in Figs. 5a and 5b, respectively, are just two examples. The differences between them are not due to one being a master signature and the other being a sample signature.

The system is as good in analysing a straight line as a curved line.

Referring to figure 1 the HDAS works as follows:
The first task in the analysis process is to position a paper (not shown) on a vacuum chamber plate 1 with some openings 2 so that the paper at least partly covers the openings. A pump 3 is started. When the pump is active the vacuum system keeps the paper in position and makes sure that the paper is as flat as possible. Without the vacuum system, the indentation measurement will be difficult to perform correctly, as the topography of the paper will vary too much.

As disclosed in Fig. 1, the device also comprises a computer 4 with a monitor 5 connected to a camera 6 with optics 7 or an objective 7. The objective can be a microscope with the camera positioned to capture pictures of the magnified image led along the optical path through the microscope. The image recorded by the camera is displayed in the monitor.

The camera 6 and objective 7 are held by a z-table 8a with a motor (not shown) that can move the camera and objective vertically in relation to the paper. A xy-table 8b with a motor (not shown) can move the vacuum chamber plate 1 and the piece of paper in relation to the camera and objective. Alternatively, the z-table 8a can be a xyz-table and the xy-table 8b is then unnecessary.

The computer can control the camera 6, objective 7, the z-table 8a and xy-table 8b. If a xyz-table replaces the z-table and xy-table then the computer can control the camera, objective, and the xyz-table.

A semi dark field ring light 9 is positioned between the objective 7 and the paper positioned on top of the openings 2. The semi dark field ring light will illuminate the paper indirectly - the light will be reflected with equal intensity from all parts of the paper, no matter whether it is flat or with a dented surface.

Fig. 2 shows a signature 10. The operator defines an area in which the signature is positioned, the Area Of Interest (AOI) 11. This is defined by the user through interaction with the software, by moving the optical centre, as viewed in the monitor 5, to the border positions and saving these positions. The software can then create an overview image of the AOI.

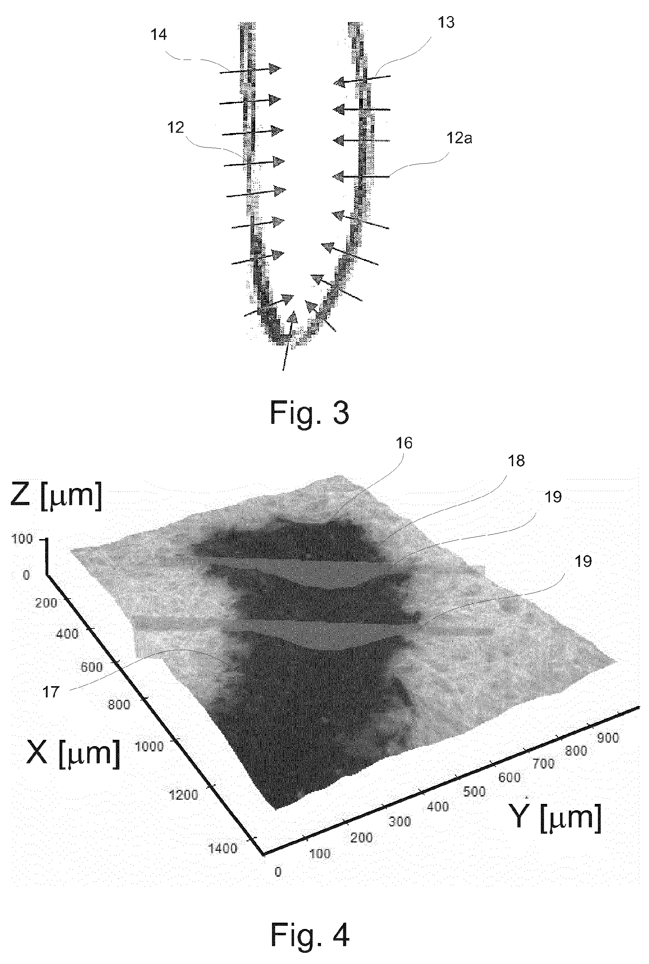

In the overview image of the signature disclosed in Fig. 2 and captured with the camera 6 and the objective 7 in low magnification mode, the operator selects points 12 of the signature, where the indentation is to be measured and the operator selects the direction of the measurement as indicated by an arrow 12a for each point 12. This is shown in Fig. 3.

Of the signature shown in Fig. 2 only the part within the dashed rectangle is investigated in Fig. 3. Just a part of the signature can have enough variations in indentation to confirm or invalidate the genuineness of the sample signature when compared to the same part of the master signature. Sometimes it will turn out that the sample signature has to be compared to the whole master signature to be able to confirm or invalidate the genuineness of the signature in question.

In another embodiment, the user only defines start 13 and stop 14 points and the number of points to be analysed. The computer program will then automatically position the measurement points 12 in between. At the same time, as the positions are selected and saved in the computer 4, the operator selects the direction of measurement by drawing an arrow 15 on the overview image, as shown in Fig. 3. Of course, the computer program can automatically select a direction of measurement instead. Even though it is possible to move the camera and the paper relative to each other along the selected direction during a scan if a very detailed investigation of the signature is needed, the main reason for the selected direction is to eliminate the risk that the image of the master signature and the image of the sample signature are antiparallel to each other during comparison.

To measure the indentation in each point, the software must have defined the maximum and minimum height of the paper in the AOI as all positions will be scanned from the bottom level to level top level in the Z-direction or from the top level to the bottom level. The user can define the maximum and minimum height of the paper by finding the top level and bottom level focus position (first position in which all points in the image become out of focus) at different positions in the AOI. Alternatively, the computer can determine the maximum and minimum height of the paper automatically.

Once the paper is fixed and the top and bottom of the paper preferably within the AOI is found, the analysis can start.

The software moves the paper by means of the motor controlled XY stage 1, to the first defined measurement point on the signature, the first subarea of interest (SAOI). Then the optics is moved in the vertical direction by means of the z-table 8a, to the vertical defined top position. The software then captures an image with the camera 6 and the objective 7 at the vertical top and saves it. Afterwards it moves down at a predetermined fraction of the distance between the defined top and the bottom positions. Then a new image is captured at the new position. This process is continued until the bottom is reached, and an image at all the vertical positions has been captured. The number of images captured is the distance from Top to Bottom divided by the distance of the fraction. This is defining the resolution of the indentation measurement. After all images have been captured, the software calculates from each image which parts of the image that are in focus, and this part is saved together with the corresponding vertical position.

After this has been done with all images, the software calculates a 3-dimensional image from the parts of each image being in focus and the vertical position of these individual parts. Example of such an image is shown in Fig. 4.

The dark area in Fig. 4 is a pigment line 16. The pigment line has a left longitudinal edge 17 and a right longitudinal edge 18, respectively. Two light grey vertical planes 19 are shown, which also disclose the profile of the signature line.

The vertical planes 19 delimits the area of the signature line and based on this limited area of the signature line an averaged 2-dimensional profile is calculated, as disclosed in Fig. 5a.

From each of these 3-dimensional images a 2-dimensional profile line (vertical position as function of the XY displacement across the signature) at the specified point is averaged in order to minimize the effect of the natural topography of the paper which origins from the fibres of which the paper is made as well as noise and other artefacts.

The curve in Fig. 5a shows a master profile of a master indentation line 20a caused by a tip of a pen. The depth of the indentation in Fig. 5a is exaggerated in relation to the width for illustrative purposes only. The pigment from the pen has made a master pigment line 16a, of which we also see a profile.

Likewise, the curve in Fig. 5b shows a sample profile of a sample indentation line 20b caused by a tip of a pen. Even here there is a sample pigment line 16b, of which we also see a profile. The depth of the indentation in Fig. 5b is exaggerated in relation to the width for illustrative purposes only.

It is clearly seen that the master profile and the sample profile are different. The difference could e.g. be due to difference in the shapes of the tips of the pens used, in the hardness of the paper, or in the inclinations of the pens used.

Both the averaged master profile and the averaged sample profile are mean value profiles within the vertical planes 19 of each their 3-dimensional image, of which one is shown in Fig. 4.

From the averaged 2-dimensional profile the depth of the indentation can be calculated as follows (for ease of reading "master" and "sample" are omitted even though implied by the reference numbers):
The distances from a bottom 21a,21b of the indentation lines 20a,20b or of the pigment lines 16a, 16b to a first position 22a,22b in which the profile of the indentation lines change direction are calculated. This is one method to define the depth of the indentation. Another method to define it is the distance between the bottom 21a,21b of the indentation line 20a,20b or of the pigment line 16a,16b and a highest position 18a,18b of where the pigment line 16a,16b can be detected across the 2-dimensional profile. This detection can easily be made by analysing the colour of the 2-dimensional curve with basic software image analysing tools, as the pigment line has a different colour than the paper. Tests have shown that the two methods give approximately the same results. From the 2-dimensional curve the angle, at which the pen has been set during the writing of the master signature, can be calculated from the difference in highest position of a left longitudinal edge 17a,17b and a right longitudinal edge 18a,18b of the pigment line 16a,16b.

Both of the 2-dimensional profiles shown in Fig. 5a and 5b, respectively, show that the pen during writing has been tilted to the left. If the 2-dimensional profile is from a signature line having a direction radially out from the writer with the direction out of the paper towards the writer and the direction down into the paper away from the writer the writer(s) has used the left hand when writing the signatures.

In Fig. 5a and 5b there are a top line 24a,24b, a bottom line 25a,25b, and some intermediate lines 26a,26b shown to the right. The top line 24a,24b, the bottom line 25a,25b, and the intermediate lines 26a,26b show the positions of the focal plane of the objective for the different pictures captured of the signature within the SAOI. So the distance between the intermediate lines 26a,26b defines the height measurement resolution.

When the indentation and/or angle has been measured and calculated in all defined points, the indentation and/or angle are plotted against the length along the signature line as shown in Figs. 6a and 6b.

In order to find out if the sample signature is a forgery or genuine, the same procedure is repeated for the master signature and the sample signature in question. The correlation between the two curves is then calculated or the two curves are just plotted on top of each other as in Figs. 6a and 6b.

On the x-axis in Figs. 6a and 6b, the distances along the signature line of the master signature and of the sample signature are disclosed. The y-axis shows the distance between the bottom 21a,21b of the curve and the first position 22a,22b in which the profile of the indentation line changes direction.

Fig. 6a shows a master signature 27 (dashed line) and a sample signature 28 (solid line) written by the same person. The sample signature is genuine.

Fig. 6b shows a master signature 27 (dashed line) and a sample signature 28 (solid line) written by different person. Somebody has tried to imitate the signature of the master signature. The sample signature is a forgery.

Figs. 6a and 6b clearly disclose how different the indentation of the signature varies along the signature if two different persons have written them and how equal the variations in indentation of two signatures are when written by the same person.

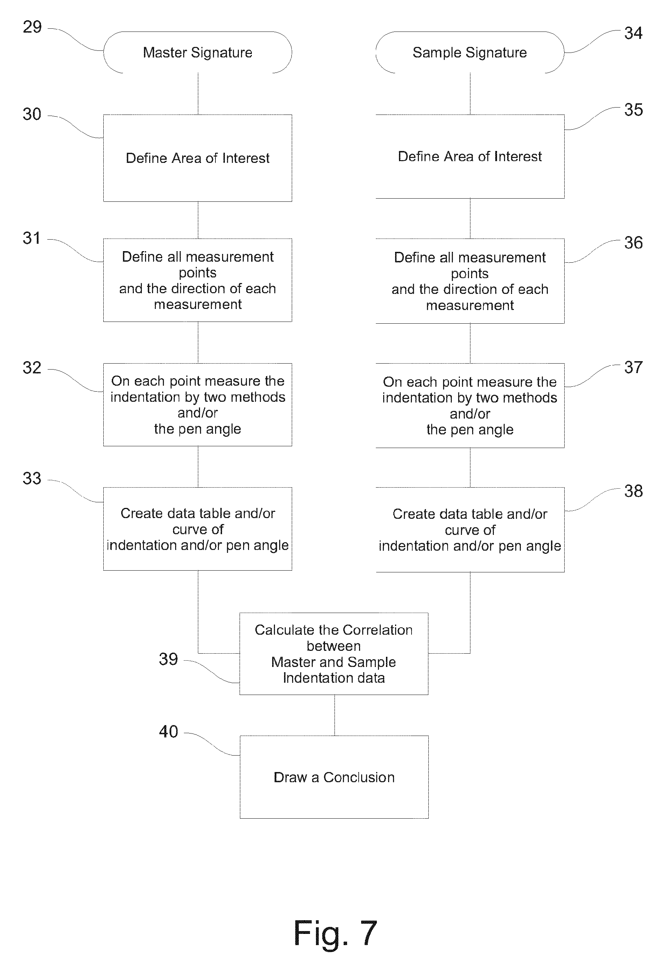

In Fig. 7 is a flowchart that shows the procedure how to confirm or invalidate the genuineness of a sample.

In a first step 29 a master signature is retrieved, where the master signature is known to be signed by the person with the identity corresponding to the signature.

In a second step 30, an Area of interest (AOI) is chosen. The AOI can comprise the whole master signature or just a part of the master signature. Advantageously, the AOI comprise at least a part of the master signature with many curvatures.

In a third step 31, the software preferably zooms in on the AOI so that the user of the device can select all the measurement points (SAOIs) accurately or, if only the start and the stop points are selected, see the positions of all the intermediary points the software has selected.

In the third step, the user also has to define in each measurement point the direction, which is preferably perpendicular to the signature line. To define the direction is important, since it will help the software to find the right direction of how to average and calculate the 2-dimensional profile from the 3-dimensional image of the position. To know the direction is also important if the difference in height of the left longitudinal edge and the right longitudinal edge of the pigment line is used as the master parameter or sample parameter.

When the measurement points and their directions are selected, the master parameter like e.g. the indentation in each measurement point is measured as shown in a fourth step 32. In addition or alternatively, the pen angle is calculated in each measurement point. To use two different methods increases the reliability. If e.g. it is difficult to determine the top level of the paper, because e.g. the surface of the paper is very uneven, then comparison of the variations in indentation along a master signature and a sample signature will verify with a high accuracy whether the sample signature is genuine. If the amount of pigment in at least one of the signatures is very low, then it is better to look at the variation in the pen orientation along the master signature and the sample signatures. The pen orientation can be determined by determining the relative height of the longitudinal edges of the pigment line, and/or the relative position of the longitudinal edges of the indentation and of the pigment line.

In a fifth step 33, the master parameter like e.g. the indentation of the master signature and/or the pen angle is plotted against the position along the master signature.

In sixth step 34 to tenth step 38 the same procedure is performed for the sample signature. The sample parameter of the same type as the master parameter is plotted for the sample signature as was plotted for the master signature against the position along the signature. In other words, if e.g. the indentation of the master signature is plotted against the position along the master signature then the indentation of the sample signature is plotted against the position along the sample signature.

Of course the steps 34 to 38 can precede the steps 29 to 33.

In a further step 39, the plot or graph of the master parameter versus the length along the master signature is compared on the screen or on a paper with the sample parameter versus the length along the sample signature. The correlation between the master parameter versus the length along the master signature and the sample parameter versus the length along the sample signature can be calculated.

The user draws in a final step 40 the conclusion whether the sample signature is genuine or a forgery based on the comparison or the correlation number.

## Claims

1. A method of verifying, based on a handwritten master signature (27) on a signature accepting structure such as paper, the authenticity of a handwritten sample signature (28), the master signature being a master indentation line (20a) and the sample signature being a sample indentation line (20b) on the signature accepting structure, **characterised in that** the method comprises the steps of:
- providing a light source (9),
- providing a camera (6) with an objective (7) configured to magnify the image of at least a segment of the signature,
- providing a fixation means (1) for fixing the signature accepting structure on or at the fixation means, the fixation means being spaced apart from the objective (7),
- obtaining a plurality of master images represented by master data at a plurality of master subareas of interest (SAOIs) along the master indentation line (20a) of the master signature (27) using the camera (6) to provide at least a part of a representation of the master signature,
- analysing the obtained master data to obtain a plurality of master parameters of the plurality of master SAOIs of the master signature,
- obtaining a plurality of sample images represented by sample data at a plurality of sample SAOIs along the sample indentation line (20b) of the sample signature (28) using the camera to provide at least a part of a representation of the sample signature,
- analysing the obtained sample data to obtain a plurality of sample parameters of the plurality of sample SAOIs of the sample signature, and
- comparing the obtained plurality of master and sample parameters to verify the authenticity of the handwritten sample signature (28).

2. A method according to claim 1 **characterised in that** the master and sample parameters are chosen from one or more of:
- depth or width of the master indentation line (20a) within the plurality of master SAOIs and of the sample indentation line (20b) within the plurality of sample SAOIs, respectively, or
- depth, thickness or width of a master pigment line (16a), or relative height of two master longitudinal edges (17a,18a) of the master pigment line (16a), or relative position of the master pigment line (16a) within the master indentation line (20a) within the plurality of master SAOIs and depth, thickness or width of a sample pigment line (16b), or relative height of two sample longitudinal edges (17b, 18b) of the sample pigment line (16b), or relative position of the sample pigment line (16b) within the sample indentation line (20b) within the plurality of sample SAOIs, respectively, where the master signature being the master (16a) pigment line within the master indentation line (20a) on the signature accepting structure and the sample signature being the sample pigment line (16b) within the sample indentation line (20b) on the signature accepting structure.

3. A method according to claim 1 or 2 **characterised in that** the numbers of master SAOIs and of sample SAOIs are at least m and n, respectively, where m and n independently of each other are at least five, at least ten, preferably at least 20, preferably at least 30, preferably at least 50, preferably at least 75, or preferably at least 100, wherein the method comprises the steps of:
- obtaining at at least an i^{th} of the at least m master SAOIs of the master signature (27) at least two master images represented by master data using the camera (6), where i is an integer between or including 1 or m, and
- obtaining at at least a j^{th} of the at least n sample SAOIs of the sample signature (28) at least two sample images represented by sample data using the camera, where j is an integer between or including 1 or n.

4. A method according to claim 3 **characterised in that** the method comprises the steps of:
- obtaining at at least an i^{th} of the at least m master SAOIs of the master signature (27) a series of master images at different selected relative positions and/or distances between the objective (7) and the master signature, and
- obtaining at at least a j^{th} of the at least n sample SAOIs of the sample signature (28) a series of sample images at different selected relative positions and/or distances between the objective and the sample signature.

5. A method according to any of the claims 1 to 4 **characterised in that** the method further comprises the step of
- determining the correlation between the master and sample parameters using statistical analysis.

6. A method according to any of the claims 4 to 5 **characterised in that** the method further comprises the steps of:
a) calculating, from each image of the series of master images, a master fragment being in focus, obtaining a series of master fragments,
b) calculating, using the obtained series of master fragments, the master parameter at the at least i^{th} of the at least m master SAOIs based on one or more of:
- the distance between the top (22a,24a) and bottom (21a) levels of the master indentation line (20a),
- the distance between the top (18a) and bottom (21a) levels of the master pigment line (16a),
- the relative height of the two master longitudinal edges (17a,18a) of the master pigment line,
- the distance between the top (22a,24a) and bottom (21a) levels of the 2-dimensional master profile, or
- the distance between the top level (18a) of the master pigment line (16a) and the bottom level (21a) of the 2-dimensional master profile,
c) calculating, from each image of the series of sample images, a sample fragment being in focus, obtaining a series of sample fragments,
d) calculating, using the obtained series of sample fragments, the sample parameter at the at least j^{th} of the at least n sample SAOIs based on one or more of:
- the distance between the top (22b,24b) and bottom (21b) levels of the sample indentation line (20b),
- the distance between the top (18b) and bottom (21b) levels of the sample pigment line (16b),
- the relative height of the two sample longitudinal edges (17b,18b) of the sample pigment line,
- the distance between the top (22b,24b) and bottom (21b) levels of the 2-dimensional sample profile, or
- the distance between the top level (18b) of the sample pigment line (16b) and the bottom level (21b) of the 2-dimensional sample profile,
and optionally one or more of the further steps of:
a') subsequent to step a, wherein step a' includes the steps:
- saving/storing from the series of master images the master fragments in focus together with for each master fragment the associated distance between the objective and the master signature (27),
- calculating based on the at least i^{th} of the at least m master SAOIs of the master signature (27) a 3-dimensional master image made up by the saved/stored master fragments of each of the series of master images and the associated distances between the objective and the master signature, and
- calculating a 2-dimensional master profile perpendicular to the master signature (27) based on the 3-dimensional master image at the at least i^{th} of the at least m master SAOIs, and
c') subsequent to step c, wherein step c' includes the steps:
- saving/storing from the series of sample images the sample fragment in focus together with for each sample fragment the associated distance between the objective and the sample signature (28),
- calculating based on the at least j^{th} of the at least n SAOI of the sample signature (28) a 3-dimensional sample image made up by the saved/stored sample fragments of each of the series of sample images and the associated distances between the objective and the sample signature, and
- calculating a 2-dimensional sample profile perpendicular to the sample signature (28) based on the 3-dimensional sample image at the at least j^{th} of the at least n sample SAOIs.

7. A method according to any of the claims 1 to 6 **characterised in that** the method further comprises the steps of:
- defining a start SAOI and an end SAOI along the line of the master signature (27) or the sample signature (28), and
- using a software programme to select a predefined number of SAOIs between the start SAOI and the end SAOI along the line, preferably the predefined SAOIs are equidistant.

8. A method according to any of the claims 1 to 7 **characterised in that** the method comprises the preparing steps of:
- providing a vacuum table (1) as the fixation means, which vacuum table (1) is spaced apart from the objective, and
- providing vacuum to the vacuum table for fixing the signature accepting structure on the vacuum table.

9. A method according to any of the claims 1 to 8 **characterised in that** for each of the plurality of master SAOIs along the master indentation line (20a) of the master signature (27) a master direction perpendicular to the master indentation line and for each of the plurality of sample SAOIs along the sample indentation line (20b) of the sample signature (28) a sample direction perpendicular to the sample indentation line are chosen.

10. A device for verification based on a handwritten master signature (27) the authenticity of a handwritten sample signature (28), which handwritten master signature (27) is a master indentation line (20a) on a signature accepting structure, such as paper, and which handwritten sample signature (28) is a sample indentation line (20b) on a signature accepting structure, such as paper, the device comprises a fixation means (1), such as a fixation table, and a processor (4), a camera (6) with an objective (7) configured to magnify an image of at least a segment of a signature (27;28), and a moving member (8a,8b) to move the camera and the objective relative the fixation means, **characterised in that**
the device is adapted to capture
a plurality of master images of a plurality of master SAOIs (subarea of interest) of the handwritten master signature (27) on the signature accepting structure when held in place by the fixation means, and
a plurality of sample images of a plurality of sample SAOIs of the handwritten sample signature (28) on the signature accepting structure when held in place by the fixation means,
the processor has analysing software adapted to obtain
a plurality of master parameters from the plurality of master SAOIs of the master signature (27), and
a plurality of sample parameters from the plurality of sample SAOIs of the sample signature (28), and
the processor has comparing software adapted to compare the plurality of master parameters and the plurality of sample parameters.

11. A device according to claim 10 **characterised in that** the master signature is a master (16a) pigment line within the master indentation line (20a) on the signature accepting structure and the sample signature is a sample pigment line (16b) within the sample indentation line (20b) on the signature accepting structure, the master and sample parameters are chosen from one or more of:
- depth or width of the master indentation line (20a) within the plurality of master SAOIs and of the sample indentation line (20b) within the plurality of sample SAOIs, respectively,
- depth, thickness or width of a master pigment line (16a) , or relative height of two master longitudinal edges (17a, 18a) of the master pigment line (16a), or relative position of the master pigment line (16a) within the master indentation line (20a) within the plurality of master SAOIs and depth, thickness or width of a sample pigment line (16b), or relative height of two sample longitudinal edges (17b, 18b) of the sample pigment line (16b), or relative position of the sample pigment line (16b) within the sample indentation line (20b) within the plurality of sample SAOIs, respectively, where the master signature being the master (16a) pigment line within the master indentation line (20a) on the signature accepting structure and the sample signature being the sample pigment line (16b) within the sample indentation line (20b) on the signature accepting structure.

12. A device according to claim 10 or 11 **characterised in that** the numbers of master SAOIs and of sample SAOIs are at least m and n, respectively, where m and n independently of each other are at least five, at least ten, preferably at least 20, preferably at least 30, preferably at least 50, preferably at least 75, or preferably at least 100, where the device is adapted to capture:
- at at least an i^{th} of the at least m master SAOIs of the master signature (27) at least two master images represented by master data using the camera, where i is an integer between or including 1 and m, and
- at at least a j^{th} of the at least n sample SAOIs of the sample signature (28) at least two sample images represented by sample data using the camera, where j is an integer between or including 1 and n.

13. A device according to claim 12 **characterised in that** the device is adapted to capture:
- at at least an i^{th} of the at least m master SAOIs of the master signature (27) a series of master images at different selected relative positions of and/or distances between the objective (7) and the master signature (27), and
- at at least a j^{th} of the at least n sample SAOIs of the sample signature (28) a series of sample images at different selected relative positions of and/or distances between the objective and the sample signature (28).

14. A device according to claim 13, **characterised in that** the analysing software is adapted to calculate
- a master fragment being in focus of each image of the series of master images, to obtain a series of master fragments,
- a sample fragment being in focus of each image of the series of sample images, to obtain a series of sample fragments, and
- the master parameter at the at least i^{th} of the at least m master SAOIs, using the series of master fragments, based on one or more of:
- the distance between the top (22a,24a) and bottom (21a) levels of the master indentation line (20a),
- the distance between the top (18a) and bottom (21a) levels of the master pigment line (16a), or
- the relative height of the two master longitudinal edges (17a,18a) of the master pigment line, and
- the sample parameter at the at least j^{th} of the at least n sample SAOIs, using the series of sample fragments, based on one or more of:
- the distance between the top (22b,24b) and bottom (21b) levels of the sample indentation line (20b),
- the distance between the top (18b) and bottom (21b) levels of the sample pigment line (16b), or
- the relative height of the two sample longitudinal edges (17b,18b) of the sample pigment line,
and optionally **in that**
the analysing software is adapted to save/store
- from the series of master images at least the master fragments in focus together with for each master fragment the associated distance between the objective (7) and the master signature (27), and
- from the series of sample images at least the sample fragments in focus together with for each sample fragment the associated distance between the objective and the sample signature (28),
the analysing software is adapted to calculate
- for the at least i^{th} of the at least m master SAOIs of the master signature (27) a 3-dimensional master image made up by the saved/stored master fragments of each of the series of master images and the associated distances between the objective and the master signature,
- a 2-dimensional master profile perpendicular to the master signature (27) based on the 3-dimensional master image at the at least i^{th} of the at least m master SAOIs,
- for the at least j^{th} of the at least n sample SAOIs of the sample signature (28) a 3-dimensional sample image made up by the saved/stored sample fragments of each of the series of sample images and the associated distances between the objective and the sample signature, and
- a 2-dimensional sample profile perpendicular to the sample signature (28) based on the 3-dimensional sample image at the at least j^{th} of the at least n sample SAOIs,
- the master parameter at the at least i^{th} of the at least m master SAOIs based on the distance between the top (22a,24a) and bottom (21a) levels of the 2-dimensional master profile, or based on the distance between the top level (18a) of the master pigment line (16a) and the bottom level (21a) of the 2-dimensional master profile, and
- the sample parameter at the at least j^{th} of the at least n sample SAOIs based on the distance between the top (22b,24b) and bottom (21b) levels of the 2-dimensional sample profile, or based on the distance between the top level (18b) of the sample pigment line (16b) and the bottom level (21b) of the 2-dimensional sample profile.

15. A device according to any of the claims 10 - 14 **characterised in that** the fixation means is a vacuum table (1).
